(19) Europäisches Patentamt / European Patent Office / Office européen des brevets

(11) **EP 2 306 552 B1**

(12) **EUROPEAN PATENT SPECIFICATION**

(45) Date of publication and mention
of the grant of the patent:
**26.11.2014 Bulletin 2014/48**

(51) Int Cl.:
*H01M 2/16* (2006.01)    *C08J 9/42* (2006.01)
*H01M 2/34* (2006.01)    *H01M 10/42* (2006.01)
*H01M 10/0525* (2010.01)

(21) Application number: **09797928.0**

(22) Date of filing: **15.07.2009**

(86) International application number:
**PCT/JP2009/062773**

(87) International publication number:
**WO 2010/008003 (21.01.2010 Gazette 2010/03)**

(54) **SEPARATOR FOR ELECTRICITY STORAGE DEVICE**

SEPARATOR FÜR EINE STROMSPEICHERVORRICHTUNG

SÉPARATEUR POUR DISPOSITIF DE STOCKAGE D'ÉLECTRICITÉ

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **16.07.2008   JP 2008184715
30.09.2008   JP 2008252815**

(43) Date of publication of application:
**06.04.2011   Bulletin 2011/14**

(73) Proprietor: **Toray Industries, Inc.
Tokyo, 103-8666 (JP)**

(72) Inventors:
• **MATSUI, Ryousuke
Otsu-shi
Shiga 520-8558 (JP)**
• **OHKURA, Masatoshi
Otsu-shi
Shiga 520-8558 (JP)**
• **IKOMA, Kei
Otsu-shi
Shiga 520-8558 (JP)**
• **TAKANISHI, Keijiro
Otsu-shi
Shiga 520-8558 (JP)**
• **KUMA, Takuya
Otsu-shi
Shiga 520-8558 (JP)**

(74) Representative: **Kador & Partner
Corneliusstraße 15
80469 München (DE)**

(56) References cited:
**EP-A1- 1 826 842        WO-A1-2007/066768
JP-A- 2007 157 723      JP-A- 2008 123 988
US-A1- 2007 264 577    US-B1- 6 287 720**

**Description**

[Technical field]

The present invention relates to a power storage device separator that has good electric and safety properties. Specifically, it relates to a high safety power storage device separator suitable for high output lithium ion secondary batteries that consists of a polyolefin based porous film laminated with a particle-containing layer containing heat resistant particles, binder and resin particles with a low melting point, and that accordingly have not only a high heat resistant dimensional stability but also good electric properties characteristic of polyolefin based porous films, and also has the ability to disenable ionic conduction through a shutdown function in case of abnormal heat generation in the power storage device.

[Background art]

Polyolefin based porous films have good mechanical properties in addition to good electrical insulating properties and high ion permeability, and consequently, have been in particularly wide use as material for the separators in lithium ion secondary batteries. In addition, studies are also made for development of films with a large pore size, decreased thickness, and high porosity, to meet demands for batteries with a high output density and high energy density (for instance, see Patent documents 1 to 3).

However, although these studies can provide batteries with higher performance, they actually tend to be poor in safety characteristics, leading to troubles. There have been some safety-oriented proposals including the addition of a heat resistant porous polymer layer to the porous polyolefin film (for instance, see Patent document 4) and the addition of a protect layer composed of inorganic particles and a heat resistant polymer (for instance, see Patent document 5). It is still difficult, however, for these proposals to maintain both safety and battery performance at a high level. Specifically, Patent document 4 proposes the addition of a heat resistant layer of a high melting point polymer to the porous polyolefin film, but the product is low in porosity, and accordingly unsuitable to produce batteries with high performance, indicating that it cannot serve sufficiently as a high output separator in particular. Patent document 5 proposes to coat a porous film with a shutdown function with a layer containing heat resistant ceramic particles, but the shutdown temperature in such a separator will closely depend on the properties of the porous film, making it impossible to adjust and control the shutdown temperature separately for different active materials. For some active materials, furthermore, the shutdown function itself is of no practical use.

[Prior art reference]

[Patent document]

Patent document 1: Japanese Unexamined Patent Publication (Kokai) No. HEI-11-302434
Patent document 2: International Publication WO 2005/61599
Patent document 3: Japanese Unexamined Patent Publication (Kokai) No. 2006-183008
Patent document 4: Japanese Unexamined Patent Publication (Kokai) No. 2005-285385
Patent document 5: Japanese Unexamined Patent Publication (Kokai) No. 2007-324073

[Summary of the invention]

[Problems to be solved by the invention]

The object of the invention is to solve said problems. Specifically, the invention aims to provide a power storage device separator with both high level battery performance and safety characteristics that is produced by laminating a polyolefin based porous film with a particle-containing layer.

[Means of solving the problems]

Said problem can be solved by using a power storage device separator according to claim 1 comprising a polyolefin based porous film laminated on at least one side with a particle-containing layer containing a cellulose based resin, inorganic particles, and thermoplastic resin particles with a melting point of 100 to 140°C.

## EP 2 306 552 B1

[Effect of the invention]

The power storage device separator of the invention have good battery properties suitable for the separator of lithium ion batteries for high output uses, as well as high safety characteristics, thus serving effectively as a power storage device separator.

[Description of embodiments]

Hereinafter, a porous film of a thermoplastic resin such as polyolefin resin will be occasionally referred to as a polyolefin based porous film or porous resin film. A porous film comprising a polyolefin based porous film or a porous resin film laminated on at least one side with a functional layer containing inorganic particles will be occasionally referred to as a power storage device separator or a gas permeable film.

A polyolefin based porous film that constitutes the power storage device separator of the invention contains a large number of gas permeable, fine through-pores that penetrate the film from one surface to the other. To form said through-pores in the film, either a wet process or a dry process can be useful, but the use of a dry process is desirable because the required processing step can be simplified.

The useful polyolefins to constitute the polyolefin based porous film of the invention include single-component polyolefin resin such as polyethylene, polypropylene, polybutene-1, poly 4-methyl pentene-1, mixtures thereof, and random or block copolymers of monomers.

The polyolefin based porous film to constitute the power storage device separator of the invention preferably has a melting point of 155 to 180°C to maintain a high heat resistance. If the melting point is less than 155°C, the porous film can suffer size change during the step of forming a particle-containing layer over the porous film. To produce a polyolefin based porous film with a melting point of higher than 180°C, on the other hand, it will be necessary to add a large amount of heat resistant resin other than the polyolefin resin, possibly causing the ionic conduction performance, which represents an essential property for separators, to deteriorate considerably. If the polyolefin based porous film show a single melting point, needless to say, it is taken as its melting point, but two or more melting points are observed in the case of, for instance, a porous film composed of a mixture of several polyolefin species, then the highest one of the measured melting points is taken as the melting point of the polyolefin based porous film. The melting point of the polyolefin based porous film is more preferably 160 to 180°C, still more preferably 165 to 180°C, in view of the heat resistance. If the polyolefin based porous film show two or more melting points as in the above case, it is preferable that all of them are in said range.

To have good battery properties, the polyolefin based porous film to constitute the power storage device separator of the invention is preferably formed of a polypropylene resin, and it is particularly preferable that it is a porous film produced by a pore production process called β-form crystal method.

To form through-pores in a film by β-form crystal method, it is important to produce a large number of β-form crystals in the polypropylene resin. This is achieved preferably by using an additive called the β-form nucleating agent, which is a crystal nucleating agent that can selectively form β-form crystals when added to a polypropylene resin. The useful β-form crystal nucleating agents include various pigment based compounds and amide based compounds, of which particularly preferable is the amide based compound disclosed in Japanese Unexamined Patent Publication (Kokai) No. HEI-5-310665. The content of the β-form nucleating agent is preferably 0.05 to 0.5 parts by mass, more preferably 0.1 to 0.3 parts by mass, relative to 100 parts by mass of the entire quantity of the polypropylene resin.

The polypropylene resin to constitute the polyolefin based porous film of the invention is preferably an isotactic polypropylene resin with a melt flow rate (hereinafter referred to as MFR, measured under conditions of 230°C and 2.16 kg) in the range of 2 to 30 g/10 min. If the MFR is out of said preferable range, the processability will decrease in the stretching step described later, occasionally making it difficult to produce a biaxial stretched film. The MFR is more preferably in the range of 3 to 20 g/10 min.

The isotactic polypropylene resin preferably has an isotactic index of 90 to 99.9%. If the isotactic index is less than 90%, the crystallinity of the resin will be low, occasionally making it difficult to achieve a high gas permeability. As the isotactic polypropylene resin, commercially available resin products may be used.

Needless to say, the polyolefin based porous film of the invention may be either a homopolypropylene resin or a polypropylene copolymerized with a ethylene component or an α-olefin component such as butene, hexene, and octene up to 5 mass% or less in view of the stability, film forming performance, and uniformity of physical properties during the film production step. Such introduction of comonomers in to the polypropylene may be carried out by either random copolymerization or block copolymerization.

Said polypropylene resin preferably contains a high melt tension polypropylene up to 0.5 to 5 mass% to improve the film production efficiency. The high melt tension polypropylene refers to a polypropylene resin produced by mixing a polypropylene with a high-molecular weight component or a branched component or by copolymerizing a polypropylene a long chain branched component in order to increase the tension in the molten state. In particular, it is preferable to use a polypropylene resin copolymerized with a long chain branched component. Such high melt tension polypropylene is commercially available, and the useful products include, for instance, PF814, PF633, and PF611 polypropylene resin supplied by Basell; WB130HMS polypropylene resin supplied by Borealis; and D114, and D206 polypropylene resin supplied by Dow.

With respect to the polypropylene resin to constitute the polyolefin based porous film of the invention, an ethylene-α-olefin copolymer is preferably added to the polypropylene resin up to 1 to 10 mass% to improve the pore formation efficiently during the stretching step, and increase the pore size, leading to an improved gas permeability. Here, the useful ethylene-α-olefin copolymers include straight-chain low density polyethylene and very low density polyethylene. In particular, the use of an ethylene-octene-1 copolymer, produced by copolymerization with octene-1, is preferable. The ethylene-octene-1 copolymer to be used may be a commercially available product.

For the polyolefin based porous film of the invention, it is preferable to carried out β-form crystal method for pore formation, and therefore, the polypropylene resin that constitute (or contained in) the film has a β-form crystal formation ability up to 40 to 80%. If the β-form crystal formation ability is less than 40%, the film produced will fail to contain a sufficient quantity of β-form crystals, and accordingly, this leads to a decreased number of pores formed in the film through transition into α-form crystals, occasionally resulting in an undesirably low permeability film. If the β-form crystal formation ability exceeds 80%, large pores will be formed, making the film unable to serve effectively as power storage device separator. To maintain the β-form crystal formation ability in the range of 40 to 80%, it is preferable to use a polypropylene resin with a high isotactic index and add said β-form nucleating agent. The β-form crystal formation ability is more preferably 45 to 75%, particularly preferably 45 to 70%.

Apart from said β-form crystal method, a porous film can be produced by the extraction method in which a polypropylene is used as matrix resin, and an additive that will be extracted during the subsequent sheet production step is mixed in, followed by extracting only the additives with a good solvent for the extract, thereby producing pores in the matrix resin. It can also be produced by the so-called lamella stretching method in which melting extrusion is carried out at a low temperature and a high draft ratio to control the lamella structure in the unstretched film sheet, which is then uniaxially stretched to cause cleavage at the lamella interfaces, thereby producing pores.

The useful resins to constitute the porous film include, in addition to polyolefin resin, other polymer resins such as polyester resin, polyamide resin, vinyl resin, and liquid crystal polymer that can form a porous film. Specifically, they include polyolefin resins such as polyethylene and polypropylene; and others such as polyvinylidene fluoride, aramid, and polyimide. Of these, polyolefin resin is preferable in view of the stability in a battery electrolyte and the resistance to electrochemical reaction.

The power storage device separator of the invention comprises a polyolefin based porous film laminated on at least one side with a particle-containing layer containing a cellulose based resin, inorganic particles, and thermoplastic resin particles with a melting point of 100 to 140°C. The use of said particle-containing layer serves to allow the polyolefin based porous film to have both a high heat resistance and good mechanical properties at the same time. Said particle-containing layer is described in detail below.

Cellulose based resin is suitable as material for the particle-containing layer of the invention. For cellulose based resin, preparation of coating material and composition adjustment of the particle-containing layer can be performed easily using an aqueous solvent as dispersion medium. It is also possible not only to adjust the viscosity of coating material but also to control the mechanical properties of the particle-containing layer by adjusting the molecular weight of the cellulose based resin. For the invention, said cellulose based resin is preferably a cellulose ether, and specifically, the useful ones include carboxy methyl cellulose, hydroxyethyl cellulose, carboxyethyl cellulose, methyl cellulose, ethyl cellulose, and oxyethyl cellulose. Of these, carboxymethyl cellulose and hydroxyethyl cellulose are more preferable. The particle-containing layer will have poor mechanical properties and it will be brittle if the cellulose based resin is too low in mass average molecular weight, whereas the viscosity will be too high, making it difficult to achieve uniform mixing during preparation of coating material, if the molecular weight is too high. Thus, it is preferably 500,000 to 2,000,000, more preferably 800,000 to 1,600,000, and particularly preferably 1,000,000 to 1,500,000.

It is preferable that particle-containing layer that constitutes the power storage device separator of the invention contains a crosslinking agent in order to improve the mechanical properties and improve the water resistance. It is also preferable that the particle-containing layer formed over the porous resin film of the invention is a particle layer that is not water-soluble (hereinafter referred to as non-water-soluble particle layer). A particle layer composed only of inorganic particles and water-soluble cellulose based resin will be water-soluble and can suffer deterioration in dynamic performance under the existence of water. To make the particle layer non-water-soluble, it is preferable to add a crosslinking agent or a heat reaction initiator to the particle layer.

It is preferable that the non-water-soluble particle layer contains crosslinked cellulose based resin (hereinafter referred to as crosslinked cellulose based resin). Before the production of the non-water-soluble particle layer, the crosslinked cellulose resin is a water-soluble cellulose based resin, and preparation of coating material and composition adjustment of the non-water-soluble particle layer can be easily carried out by using an aqueous solvent with said water-soluble cellulose based resin. By adjusting the molecular weight of the water-soluble cellulose based resin, it is possible not only to adjust the viscosity of coating material but also to control the mechanical properties of the non-water-soluble particle layer.

Here, the crosslinking agent is preferably a polyethylene glycol with epoxy as terminal group, and it is particularly preferably to used an epoxidized polyethylene glycol containing up to 15 to 50 ethylene glycol residue units. In cases where a cellulose based resin such as carboxymethyl cellulose is used as binder in the particle-containing layer, the cellulose resin can generally be too rigid and the resulting particle-containing layer can be brittle and poor in toughness, but both high strength and toughness can be achieved at the same time by using a polyethylene glycol with epoxy as terminal group. This is likely to be the result of crosslinking caused by the reaction of the epoxy with the carboxyl group in the carboxymethyl cellulose etc., allowing the ethylene glycol residue to work to improve the flexibility. A sufficient toughness will not be achieved if the number of the ethylene glycol residue units is less than 15 whereas a sufficient rigidity will not be achieved if it exceeds 50. Here, the ethylene glycol residue refers to a structure as represented as ($-CH_2-CH_2-O-$) contained in the molecular chain, and the expression of "containing 15 glycol residue units," for instance, means that 15 units of said structure are contained in one molecular chain.

It is preferable that the content of the crosslinking agent in the particle-containing layer is 100 to 300 parts by mass, more preferably 150 to 250 parts by mass, relative to 100 parts by mass of the cellulose based resin, to achieve an improved mechanical properties. The toughness can decrease if it is less than 100 parts by mass, whereas the rigidity can decrease if it exceeds 300 parts by mass.

It is preferable that inorganic particles are used for the particle-containing layer of the invention. The useful materials for the inorganic particles for the invention include metal oxides such as silica, alumina, titania, and zirconia, and others such as barium sulfate, calcium carbonate, aluminum silicate, calcium phosphate, mica, kaolin, and clay. Of these, metal oxide such as alumina, titania, and zirconia are particularly preferable. It is preferable that these inorganic particles have an average particle diameter of 0.05 to 2 $\mu$m, more preferably 0.05 to 1 $\mu$m, in order to allow the particle layer to have both a high gas permeability and good mechanical properties at the same time. It is particularly preferable to be 0.1 to 0.6 $\mu$m. If the average particle diameter is less than 0.05 $\mu$m, the particles can enter the polyolefin based porous film from the film surface where pores are open, leading to deterioration in the gas permeability of the porous film. If the average particle diameter exceeds 2 $\mu$m, on the other hand, the gaps between the particles can be very large, leading to a particle layer with poor mechanical properties. Here, as described in detail later, the average particle diameter of the inorganic particles is determined from processed data of photographs taken by transmission electron microscopy. The diameters of near-circular particles are measured, and their mass average diameter is calculated and adopted.

It is preferable that the particle-containing layer of the invention contains said cellulose based resin and inorganic particles mixed at a mass ratio of 1 : 5 to 1 : 25 in order to provide a separator having a high gas permeability, good mechanical properties, and high heat resistance at the same time. The ratio is more preferably 1 : 7 to 1 : 22, particularly preferably 1 : 10 to 1 : 20. If the inorganic particles account for less than 5 parts by mass relative to 1 part by mass of the cellulose based resin, the particle layer can contain an excessive amount of the cellulose based resin used as binder, leading to blocking of through-pores and a decrease in the gas permeability. If the inorganic particles account for more than 25 parts by mass relative to 1 part by mass of the cellulose based resin, on the other hand, the content of the binder can be too small, leading to dropping-off of particles and deterioration in mechanical properties.

It is preferable that thermoplastic resin particles with a melting point of 100 to 140°C are used material for the particle-containing layer of the invention. This aims to allow the separator to have a shutdown function. Compared to the conventionally adopted method in which a polyethylene film is used as the polyolefin based porous film and giving it a function to shut down in a desired temperature range, the method of the invention is superior in that the shutdown temperature can be controlled separately from other separator characteristics, by changing the melting point of the particles used. On the other hand, changing the melting point of the porous film itself can have influence on various properties of the separator including the production efficiency, gas permeability, and through-pores' shape of the porous film. It will also be difficult to meet varied needs of users.

The thermoplastic resin particles used for the invention preferably has a melting point of 100 to 140°C, but if the melting point is less than 100°C, through-pores of the film can be blocked, causing shutdown malfunction in a low temperature environment of about 100°C where other materials of the power storage device work normally. If the melting point exceeds 140°C, on the other hand, a self-exothermal reaction can occur in the power storage device before shutdown takes place. In the case of a cobalt-based positive electrode as used widely in lithium ion batteries, it is preferable that the shutdown function works at 125 to 140°C in view of the heat stability of the positive electrode, and accordingly, it is preferable that the thermoplastic resin particles have a melting point of 120 to 140°C, and that the melting point is changed to ensure heat stability of a positive electrode. In the case where the thermoplastic resin particles have two or more melting points, the highest one of these melting points is required to be in said range.

There are no specific limitations on the thermoplastic resin particles with a melting point of 100 to 140°C used for the invention, if they are of a thermoplastic resin with a melting point in said range, but the particle material is preferably polyolefin resin. It is particularly preferable that the thermoplastic resin particles of such polyolefin resin as polyethylene, polyethylene copolymer, polypropylene, and polypropylene copolymer. The thermoplastic resin particles preferably have an average particle diameter of 0.5 to 5 $\mu$m, more preferably 0.8 to 3 $\mu$m.

It is preferable that the particle-containing layer of the invention contains said thermoplastic resin particles with a melting point of 100 to 140°C up to 10 to 150 parts by mass relative 100 parts by mass of to the total amount of the mixture of the cellulose based resin and the inorganic particles. If the content of the thermoplastic resin particles is less than 10 parts by mass, the shutdown function, which provides an important safety mechanism of the lithium ion battery separator, can fail to work sufficiently, whereas if it exceeds 150 parts by mass, the particle-containing layer can fail to have sufficient mechanical properties. The content of the thermoplastic resin particles is more preferably 20 to 130 parts by mass, particularly preferably 30 to 120 parts by mass.

In the particle-containing layer of the invention, it is preferable that the inorganic particles have a continuous structure in view of resistance to meltdown. If the content of the thermoplastic resin particles exceeds 150 parts by mass, the inorganic particles can fail to form a continuous structure to cause the separator to shrink in case of thermal runaway, resulting in an electrical short circuit. Here, the continuous structure is defined as a structure consisting of inorganic particles spreading continuously in the film's in-plane directions in the particle-containing layer.

The power storage device separator of the invention comprises a polyolefin based porous film laminated, by coating, on at least one side with a particle-containing layer containing inorganic particles and thermoplastic resin particles with a melting point of 100 to 140°C. It is preferable that the polyolefin based porous film has an average through-pore size of 20 to 100 nm. If the average through-pore size is less than 20 nm, the electric resistance can be too high, leading to a large energy loss, whereas the large average through-pore size exceeds 100 nm, particles can enter and block many pores, leading to a deterioration in battery performance and dendrite penetration. Increasing the thickness of the particle-containing layer can be effective in preventing dendrite penetration, though it may cause a deterioration in battery performance or a decrease in the toughness of the power storage device separator. The average through-pore size is preferably 30 to 90 nm. Here, the average through-pore size is determined according to ASTM E1294-89 (1999) (half dry method) using an automatic pore diameter distribution measuring machine (Perm-Porometer, supplied by Porous Materials Inc.). Details will be described later.

With respect to the method to control the average through-pore size in said preferable range, the control in said desired range can be achieved by adding an ethylene-$\alpha$-olefin copolymer to the polypropylene resin up to 0.1 to 10 mass% as described previously, and carrying out sequential biaxial stretching as described later to produce through-pores.

In the power storage device separator of the invention, the pore size of the polyolefin based porous film is small enough to prevent the formation of dendrites. Furthermore, the inorganic particles contained in the particle-containing layer act to prevent shrinkage (meltdown) of the separator in case of thermal runaway. In addition, the thermoplastic resin particles in the particle-containing layer serve to provide the shutdown function in case of thermal runaway. As the formation of dendrites in the polyolefin based porous film can be prevented, the particle-containing layer can be thin enough to achieve safety characteristics, good battery properties and toughness all at once.

It is preferable that the power storage device separator of the invention has an overall thickness of 15 to 40 $\mu$m, more preferably 18 to 35 $\mu$m. Furthermore, the thickness of the polyolefin based porous film is more preferably 12 to 35 $\mu$m, still more preferably 15 to 30 $\mu$m to maintain good electric properties.

It is preferable that the particle-containing layer of the invention has a thickness of 1 to 6 $\mu$m, more preferably 2 to 5 $\mu$m, in view of the heat resistant and mechanical properties. The heat resistance will not be high enough if the thickness of the particle-containing layer is less than 1 $\mu$m, whereas the electric properties will decrease or the toughness will decrease if it exceeds 6 $\mu$m. In the case where a particle-containing layer is formed on both sides of the polyolefin based porous film, it is preferable that the total thickness is in the said range of 1 to 6 $\mu$m.

It is preferable that the particle-containing layer of the invention has a thickness 0.5 to 3 times as large as the average particle diameter of the thermoplastic resin particles. If the thickness of the particle-containing layer is less than 0.5 times the average particle diameter of the thermoplastic resin particles, the heat resistance can decrease and thermoplastic resin particles can drop off. If it is more than 3 times as large, the particle-containing layer can be too thick and the electric properties can deteriorate. It is preferable that the thickness of the particle-containing layer is 1.0 to 2 times as large as the average particle diameter of the thermoplastic resin particles because high handleability and toughness can be achieved. If a particle-containing layer is formed on both sides of the polyolefin based porous film, it is preferable that the thickness of each particle-containing layer is 0.5 to 3 times as large as the average particle diameter of the thermoplastic resin particles.

It is preferable that the power storage device separator of the invention has an air permeation resistance (Gurley) in the range of 50 to 400 sec/100 ml in order to reduce the internal resistance of the power storage device and to improve the output density. If the air permeation resistance is less than 50 sec/100 ml, the through-pores will be straight and large in diameter, allowing a short circuit to take place between positive and negative electrodes. The air permeation resistance (Gurley) exceeds 400 sec/100 ml, on the other hand, the internal resistance in the power storage device can be too high to achieve a high output density.

It is preferable that the power storage device separator of the invention has a loop stiffness, converted for a

thickness of 25 $\mu$m, in the range of 800 to 2,000 $\mu$N/cm in order to maintain high processability. If the loop stiffness is less than 800 $\mu$N/cm, the film will lose bending strength and accordingly suffer creasing and the separator will not be fully disconnected at the time of cutting off, leading to a deterioration in the assemblability of the battery. In addition, the particle-containing layer can be too brittle and the particle-containing layer can drop off during assembling. If it is larger than 2,000 $\mu$N/cm, the film can lose flexibility, and the separator in a winding type battery will be very stiff to cause in increase in the tension during winding, leading to a deterioration in the assemblability of the battery. The loop stiffness is more preferably 1,000 to 2,000 $\mu$N/cm, still more preferably 1,000 to 1,800 $\mu$N/cm, in view of the assemblability of the battery.

There are no specific limitations on the method to form a particle-containing layer on at least one side of the polyolefin based porous film in the separator the invention. For instance, the surface to be covered with a particle-containing layer of polypropylene based porous film is subjected to corona discharge treatment or other surface treatment to improve its surface wettability, and coating material prepared for the particle-containing layer and dispersed in a solvent, is spread over the film surface by Meyer bar coating, gravure coating, die coating, etc. , followed by drying to form a particle-containing layer. Here, the coating material is prepared by mixing a cellulose based resin, inorganic particles and thermoplastic resin particles with a melting point of 100 to 140°C at a required composition ratio. The solvent is preferably an aqueous liquid in order to maintain safety and prevent evaporation of the volatile solvent in the environment. Here, said aqueous liquid consists of a solvent containing water up to 50 mass% or more, or a mixed solvent containing additives up to less than 50 mass%.

The coating material may contain a crosslinking agent and a heat reaction initiator, and those listed previously may be used preferably. Of them, a polyethylene glycol with an epoxy group at both ends can be used particularly preferably as said crosslinking agent.

It is preferable that the solid content in the coating material is 10 to 40 mass%, more preferably 15 to 30 mass%. If the solid content is less than 10 mass%, there can be problems such as a need of a long drying time, a decrease in productivity, a decrease in the viscosity of the coating liquid, and entry of particles in to pores of the porous film, i.e. base material, to cause a decrease in the gas permeability. If it exceeds 40 mass%, the viscosity of the coating liquid can be too high, leading to uneven coating.

To dry the coating material, it is preferable that the drying temperature is 60 to 120°C. If the drying temperature is lower than 60°C, the solvent can fail to evaporate completely, leading to a decrease in the performance of the battery used as a power storage device. If it exceeds 120°C, the thermoplastic resin particles can be melted to cause a decrease in the gas permeability. In the case where a crosslinking agent is added to the coating material, the battery performance can be decreased if unreacted material exists, and therefore, it is preferable that the reaction is carried out adequately and that the drying temperature is 80 to 120°C.

There are no specific limitations on the drying time, if the solvent can evaporate sufficiently and the crosslinking agent, if used, can react sufficiently. Commonly, however, it is roughly in the range of 20 seconds to 5 minutes.

For the power storage device separator of the invention, it is preferable that a particle-containing layer is formed on both sides of the polyolefin based porous film. If the particle-containing layer is formed only on one side, the separator can curl to cause a deterioration in the handleability. If the particle-containing layer is formed on both sides, it is preferable that the total thickness is in said range of 1 to 6 $\mu$m.

The polyolefin based porous film to constitute the power storage device separator of the invention may contain various additives including antioxidant, thermal stabilizer, antistatic agent, lubricant composed of inorganic or organic particles, antiblocking agent, filler, and non-compatible polymer, if they do not impair the effect of the invention. In particular, it is preferable that an antioxidant is added up to 0.01 to 0.5 parts by mass relative to 100 parts by mass of the polypropylene resin in order to control the oxidation degradation associated with the heat history of the polypropylene resin.

Described in detail below are the production method for the polyolefin based porous film to constitute the separator of the invention and the production method for the power storage device separator. The production method for the separator of the invention is illustrated in detail below with reference to a polypropylene porous film produced by $\beta$-form crystal method as an example, but it should be understood that the invention is not construed as being limited thereto.

An initial mixture of a predetermined composition is prepared from 94 parts by mass of a commercial homopolypropylene resin with an MFR of 8 g/10 min as the main polypropylene resin, 1 part by mass of a commercial high melt tension polypropylene resin with an MFR of 2.5 g/10 min, 5 parts by mass of very low density polyethylene resin with a melt index of 18 g/10 min, and 0.2 parts by mass of N, N' -dicyclohexyl-2, 6-naphthalene dicarboxy-amide, which are mixed and extruded from a twin screw extruder. It is preferable that the mixture has a melting temperature of 270 to 300°C.

The initial mixture is fed to a uniaxial melt extruder and melt-extruded at 200 to 230°C. After objects and modified polymers are removed by a filter installed at a halfway point of the polymer tube, the mixture is extrude through a T-die onto a cast drum to provide an unstretched sheet. It is preferable that the cast drum in this step has a surface temperature of 105 to 130°C to control the content of the $\beta$-form crystals in the cast film at a high level. As the edge shape of the sheet, in particular, can have an influence on the stretchability in the subsequent steps, it is preferable that a narrow air stream is applied to the edge to maintain close contact with the drum. Here, an air knife may be used to blow air over the entire surface, or electro-pinning is applied to maintain the polymer in close contact with the cast drum, depending on state of the contact between the entire sheet and the drum.

Then, the resulting unstretched sheet is biaxially orientated to produce pores in the film. The useful methods to achieve biaxial orientation include sequential biaxial stretching, that is, stretching first in the film's length direction followed by stretching in the width direction, or stretching first in the width direction followed by stretching in the length direction, and simultaneous biaxial stretching, that is, nearly simultaneous stretching in the length direction and in the width direction, of which adoption of sequential biaxial stretching is preferable because it is easy to produce a highly gas permeable film. In particular, stretching first in the length direction followed by stretching in the width direction is highly preferable.

With respect to the specific stretching requirements, the unstretched sheet is controlled at a temperature where the stretching in the length direction is to be performed. The useful temperature control methods include the use of a temperature-controlled revolving roll and the use of a hot air oven. It is preferable that the stretching in the length direction is carried out at a temperature of 90 to 125°C, more preferably 95 to 120°C. The draw ratio is preferably 3 to 6, more preferably 4 to 5.5. Then, once cooled, and fed to a tenter type stretching machine with the film edges held firmly. The film is then heated preferably at 140 to 155°C and stretched in the width direction to a draw ratio of 5 to 12, preferably 6 to 10. The transverse stretching speed in this step is preferably 300 to 5,000%/min, more preferably 500 to 4,000%/min. Subsequently, the film is heat-set in the tenter preferably at temperature that is above the transverse stretching temperature and below 160°C. The film may be relaxed in the length direction and/or width direction during the heatset, and in particular, it is preferable that the relaxation rate in the width direction is 7 to 12% in view of heat dimensional stability.

A coating material for particle-containing layer prepared from 1 part by mass of carboxymethyl cellulose with a mass average molecular weight of 1,300,000, 9 parts by mass of silica particles with an average particle diameter of 0.5 $\mu$m, and 5 parts by mass of polyethylene based resin particles with a melting point of 128°C that are mixed and dispersed in 85 parts by mass of ion-exchanged water was spread over at least one side of the resulting polyolefin based porous film to provide the separator of the invention. With respect to the method to coat the film with the coating material in this step, the coating can be achieved by using coating tools including direct gravure coater, microgravure coater, gravure reverse coater, reverse coater, reverse kiss coater, dye coater, slop dye coater, rod coater, and comma coater. This is followed by drying and solidification of the coated layer preferably at a temperature of 60 to 100°C to provide a power storage device separator of the invention.

Specifically, corona discharge treatment may be carried out for one side (for instance, the surface kept in contact with the drum during melt extrusion) of the polyolefin based porous film, and a coating material to form a particle-containing layer with said composition may be spread with a Meyer bar, followed by drying for 1 minute in an hot air oven at 70°C, thereby producing a separator.

With respect to the method to produce a non-water-soluble particle layer, it is preferable that an aqueous coating material prepared by mixing inorganic particles and a binder is spread over at least one side of a porous resin film to produce a coated layer, followed by drying of this coated layer to form a non-water-soluble particle layer. In this step, the binder used is preferably a water-soluble cellulose based resin. A gas permeable film that can be handled safely during the production step and that has a high water resistance after the production step can be obtained by forming a coated layer using an aqueous coating material, followed by drying of this coated layer to make it non-water-soluble. This also serves to allow the porous resin film to have high heat resistance and good mechanical properties.

It is preferable to adopt an in-line method in which a non-water-soluble particle layer is formed during said porous resin film production because the final product can be obtained in one step. For instance, corona discharge treatment is carried out on at least one side of an at least uniaxially stretched film in air or carbon dioxide atmosphere, and a coating material to constitute a non-water-soluble particle layer with said composition is spread uniformly over its surface with a Meyer bar or gravure roll, followed by drying, solidification and crosslinking of the coating material while stretching the film at least uniaxially. Adopt of this process is preferable in order to enhance the uniformity of the non-water-soluble particle layer and maintain the gas permeability of the porous resin film.

Having not only a high gas permeability and good mechanical properties but also a shutdown function and meltdown resistance, the power storage device separator of the invention, in particular, serves preferably as separator of a nonaqueous electrolyte secondary battery such as lithium ion secondary battery.

The power storage device separator of the invention has both a high gas permeability and good mechanical properties and also has meltdown resistance, and accordingly, it can be preferably used as separator for power storage devices

The power storage devices as referred to herein include nonaqueous electrolyte secondary batteries such as lithium ion secondary battery, and electric double layer capacitors such as lithium ion capacitor. As these power storage devices can be used repeatedly through charge and discharge cycles, they can serve as components of power sources for industrial equipment, home-use equipment, electric automobiles, and hybrid electric vehicles. Power storage devices incorporating the separator of the invention have such good separator properties that they can be used preferably as components of power sources for industrial equipment and automobiles.

Examples

The present invention will be illustrated in greater detail with reference to Examples. Measurement and evaluation of properties were carried out according to the following methods.

(1) β-form crystal forming ability

In Examples and Comparative examples, a 5 mg specimen of the porous film free of a particle-containing layer, or the resin of said film, was put in an aluminum pan, and measurements were made by differential scanning calorimetry (RDC220 calorimeter, supplied by Seico Electronics industrial Co., Ltd.). The specimen was first heated in a nitrogen atmosphere from room temperature up to 280°C at a rate of 10°C/min (first heating run), held there for 10 minutes, and cooled to 30°C at a rate of 10°C/min. After holding the specimen at the temperature for 5 minutes, it is heated again at 10°C/min (second heating run) while observing the melting peaks. The peaks that appeared in the temperature range of 145 to 157°C were attributed to β-form crystals whereas the melting peaks observed at 158°C or above were attributed to α-form crystals. The heat of fusion of each form of crystals was determined from the area of the peak region enveloped by the curve and the baseline, drawn on the basis of the flat portion in the high temperature range. The β-form crystal forming ability is calculated by the following equation where $\Delta H\alpha$ and $\Delta H\beta$ represent the heat of fusion of the α-form crystals and that of the β-form crystals, respectively. The data of the heat of fusion were calibrated by using indium.

β-form crystal forming ability (%) = [$\Delta H\beta$ / ($\Delta H\alpha$ + $\Delta H\beta$) ] $\times$ 100 Similar calculation based on the melting peaks observed in the first heating run gives the content of the β-form crystals in the specimen.

(2) Melt flow rate (MFR)

The MFR of polypropylene and thermoplasticity elastomer is determined according to the conditions M (230°C, 2.16 kg) specified in JIS K 7210 (1995). The MFR of polyethylene resin is determined according to the conditions D (190°C, 2.16 kg) specified in JIS K 7210 (1995).

(3) Melting point of porous film

When the above test for evaluation of the β-form crystal forming ability was carried out using, as specimen, said porous film free of a particle-containing layer, the peak at the highest temperature of those observed during the first heating run was taken as the melting point of the porous film.

(4) Average particle diameter of inorganic particles

The average particle diameter of inorganic particles was determined from photographs taken by transmission electron microscopy. Specifically, the mass average diameter was used as said average particle diameter based on instructions described in "Titanium Oxide Physical Properties and Applied Techniques" pp. 82-84, Manabu Kiyono, Gihodo Shuppan Co., Ltd., 1991. More specifically, from photographs taken at 30,000-fold magnification by transmission electron microscopy, the diameter of each near-circular particle was measured and taken as its particle diameter. The particle diameter was measured for 1,000 particles, and the particles were divided into groups in 0.05 $\mu$m increments in diameter to determine the size distribution of the particles. The average particle diameter d (mass average diameter) can be calculated by the following equation where $d_i$ (subscript i representing the i'th group) denotes the median value of each group and $n_i$ denotes the number of the particles.

[Equation 1]

$$d = (\Sigma n_i \cdot d_i^4) / (\Sigma n_i \cdot d_i^3)$$

(5) Average particle diameter of thermoplastic resin particles

The average particle diameter of the thermoplastic resin particles was determined from average particle diameter measurements taken by the Coulter counter method using Multisizer 3 equipment (supplied by Beckman Coulter, Inc.).

(6) Melting point of thermoplastic resin particles

For measurement of the melting point of thermoplastic resin particles, a specimen of an appropriate amount was taken from a particle-dispersed solvent before it is used to prepare a coating material for producing particle-containing layers, and dried at 70°C in a hot air oven, followed by collecting only the solid matter. A 5 mg specimen of the solid matter was put in an aluminum pan, and measurements were made by differential scanning calorimetry (RDC220 calorimeter, supplied by Seico Electronics industrial Co., Ltd.). The specimen was heated in a nitrogen atmosphere from room temperature up to 200°C at a rate of 20°C/min while observing the melting peaks, of which the temperature at which the highest-temperature peak appeared was taken as the melting point of the thermoplastic resin particles.

The melting point of thermoplastic resin particles can be determined from measures similarly made by differential scanning calorimeter even after the thermoplastic resin particles have been processed into a coating material designed to form a particle-containing layer or after it has been spread over a porous film. If it has been spread over a porous film, a specimen may be obtained by scraping off only the particle layer from the film surface, and observed under the same conditions to determine of the melting point of the thermoplastic resin particles.

(7) Air permeation resistance (Gurley)

A specimen of 100 mm square was taken from each separator produced in Examples and Comparative examples and used as specimen. The permeation time for 100 ml of air was measured three times at 23°C and a relative humidity of 65% using a B-type Gurley testing machine as specified in JIS P 8117 (1998). The average of the permeation time measurements was taken as the air permeation resistance (Gurley) of the film. For specimens with a very low air permeation resistance (Gurley), the measurement operation was stopped when the permeation time for 25 ml of air exceeded 30 minutes (1,800 seconds), and the air permeation resistance (Gurley) of the specimen was assumed to more than 120 min/100 ml (7,200 sec/100 ml). If the air permeation resistance (Gurley) is in the range of 10 to 200 sec/100 ml, batteries incorporating the separator will suffer little internal resistance and serve as a high output power source.

(8) Contact between porous film and particle layer

A cellophane tape (18 mm width, supplied by Nichiban Co., Ltd.) was applied to a coated layer and removed instantly. The contact between the porous film and the particle layer was evaluated based on the state of destruction caused by peeling of the tape.

Class A: Material destruction inside the porous film

Class B: Interfacial peel between coated layer and film

A specimen was classified as acceptable if it is categorized into Class A.

(9) Shutdown function

A specimen consisting of a separator fixed to a stainless steel frame of 100 mm square was prepared for two identical separators, and heat-treated in an hot air oven under the following conditions: <1> at 105°C for 30 seconds, and <2> at 135°C for 30 seconds. The separator subjected to the heat treatment <1> or <2> was removed from the metal frame, and its air permeation resistance (Gurley) was measured by the same procedures as in Paragraph (6) to make an evaluation according to the following criteria on the basis of the air permeation resistance before and after the heat treatment.

Class A: The difference in air permeation resistance before and after the heat treatment <1> is less than 25%, and the air permeation resistance is 120 minutes or more after the heat treatment <2>.

Class B: The difference in air permeation resistance before and after the heat treatment <1> is 25 to 50%, and the air permeation resistance is 120 minutes or more after the heat treatment <2>.

Class C: The difference in air permeation resistance before and after the heat treatment <1> is more than 50%.

Class D: The air permeation resistance is less than 120 minutes or more after the heat treatment <2>.

A specimen was classified as acceptable if it is categorized into either Class A or B.

(10) Meltdown resistance

A separator was heated at 0.2 MPa for 5 seconds using a heat sealer heated at 200°C. The separator after the heating step was evaluated according to the following criteria.

Class A: No size changes were detected visually.

Class B: Shrinkage at the edge of the separator was detected visually.

Class C: Visually detected pinholes had been produced in the film.

(11) Loop stiffness

A ribbon-like specimen with a length of 100 mm and width of 20 mm was cut out from a separator. The specimen was placed in the form of a loop, and a load was applied to the end of the loop to deform the loop in the direction of the diameter. The load applied, referred as the bending stress M1 (mg), was measured with a loop stiffness tester supplied by Toyo Seiki Seisaku-sho, Ltd. The loop length was 50 mm, and the deformation distance was 20 mm.
The flexural rigidity M ($\mu$N/cm) was calculated from the bending stress M1 (mg) and the specimen's thickness t ($\mu$m) by the following equation.

$$M = M1 \times 9.8 / 2$$

In the case a particle-containing layer laminated on only one side with a porous film, the loop for evaluation had the particle-containing layer on its external side.

(12) Separator resistance

A mixture solvent was prepared by mixing propylene carbonate and dimethyl carbonate at 1:1 by volume, and $LiPF_6$ was added up to a content of 1 mole/L to prepare an electrolyte. A positive and negative electrode made of nickel were placed in the electrolyte, and a separator was placed between said positive and negative electrode. An LCR meter was used to prepare a Cole-Cole plot by the complex impedance method, and the real part of the impedance at 20,000 Hz was determined for use as an index of ionic conduction. The measurement was performed in an argon atmosphere of 25°C in a glove box.
Class A: The impedance (real part) was less than 0.12 $\Omega$.
Class B: The impedance (real part) was 0.12 $\Omega$ or more and less than 0.15 $\Omega$.
Class C: The impedance (real part) was 0.15 $\Omega$ or more.

(13) Average through-pore size

The average through-pore size for a porous film free of a particle-containing layer was determined according to ASTM E1294-89 (1999) (half dry method) using an automatic pore diameter distribution measuring machine (Perm-Porometer, supplied by Porous Materials Inc.). The measuring conditions were as described below.
Test liquid: Fluorinert FC-40, supplied by 3M
Test temperature: 25°C
Test gas: air
Software for analysis: Capwin
Measuring conditions: automatic measurement under the default conditions of "Capillary Flow Porometry - Wet up, Dry down"
The measuring procedure is described in detail in the instruction manual attached to the equipment. Three measurements were made and averaged to provide the average through-pore size for the film.

(14) Evaluation of battery properties

A positive electrode of lithium cobalt oxide ($LiCoO_2$) with a thickness of 40 $\mu$m, supplied by Hohsen Corp., was worked into a disk with a diameter of 15.9 mm, and a negative electrode of graphite with a thickness of 50 $\mu$m, supplied by Hohsen Corp., was worked into a disk with a diameter of 16.2 mm. The separators produced in Examples and Comparative examples were worked into a disk with a diameter of 24 mm. The negative electrode, separator, and positive electrode were piled on top of another in such a way that the cathode active material and the anode active material were faced with each other, and placed in a small lidded stainless steel container (HS Cell, supplied by Hohsen Corp.). The container and lid were insulated. The container was in contact with the copper foil on the negative electrode, where as the lid was in contact with the aluminum foil on the positive electrode. Electrolyte prepared by adding a $LiPF_6$ solute up to a content of 1 mole/L to a mixture solvent of ethylene carbonate and dimethyl carbonate mixed at a volume ratio of 3: 7 was poured in this container and closed airtightly. A battery was produced for each Example and Comparative example.
For each secondary battery thus prepared, a charge and discharge cycle in a 25°C atmosphere consisting of charging at 0.3 mA up to 4.2V for 12 hours and discharging at 3 mA down to 2.7V was repeated 100 times.

The capacity holding ratio (%) was calculated by the following equation: [(discharged capacity in 100th cycle) / (initial discharged capacity (discharged capacity in 2nd cycle))] × 100. Test was carried out for 10 specimens, and the average was used for evaluation according to the flowing criteria.

Class A: 85% or more
Class B: 80% or more and less than 85%
Class C: less than 80%

(15) Dimensional stability

A square portion of 140 mm × 140 mm was cut out from a gas permeable film, and gage marks were made with an oil-based pen at positions 20mm from the edges to show a square of 100 mm × 100 mm to provide a specimen. Said gas permeable film was sandwiched between two glass plate of 250 mm × 250 mm with a thickness of 5 mm, and left for 1 hour in a hot air oven heated at 150°C for heat treatment. After the heat treatment, it was left to stand to cool, and then the specimen was taken out from between glass plates. The distance between the gage marks along a line passing through the specimen's center was measured, and the degree of heat shrinkage was determined from the change caused by the heating in the distance between the gage marks, and used as index of the dimensional stability. For each film, measurement was carried out for 5 specimens, and the average was used for evaluation.

(16) Resistance to water absorption

A gas permeable film was dried at 80°C for 24 hours, and left to stand in an atmosphere at 23°C and 65RH% for 240 hours. The moisture content of the gas permeable film was then measured according to the Karl Fischer's method (coulometric titration) using a MKC-510N moisture meter (supplied by Kyoto Electronics Manufacturing Co., Ltd.). For the measurement, heating was performed at 150°C.

(17) Mechanical properties

A gas permeable film was stretched tight and fixed on a ring with a diameter of 40 mm. It was stuck at the ring's center with a sapphire needle with a point angle of 60° and edge radius of 0.5 mm from the polyolefin film side at a speed of 50 mm/min, and the load (N) required for the needle penetrate the film was measured and taken as the piercing strength.

(Example 1)

Material resins for producing a polyolefin based porous film, namely, 94 parts by mass of homopolypropylene (FSX80E 4 supplied by Sumitomo Chemical Co., Ltd., hereinafter referred to as PP-1), 1 part by mass of high melt tension polypropylene resin (PF-814 polypropylene, supplied by Basell, hereinafter referred to as HMS-PP-1), 5 parts by mass of ethylene-octene-1 copolymer (Engage 8411, with a melt index of 18 g/10 minutes, supplied by The Dow Chemical Company, hereinafter simply referred to as PE-1), 0.2 part by mass of N,N'-dicyclohexyl-2,6-naphthalene dicarboxy amide, used as β-form nucleating agent, (Nu-100, supplied by New Japan Chemical Co., Ltd., hereinafter simply referred to as β-form nucleating agent), and 0.15 and 0.1 parts by mass of two antioxidants (IRGANOX1010 and IRGAFOS168, respectively, supplied by Ciba Specialty Chemicals, hereinafter simply referred to as antioxidants, added at a mass ratio 3:2 unless otherwise specified) were fed from a scale hopper into a twin screw extruder in such a way that they would be mixed at the ratio as specified above, melt-kneaded at 300°C, extruded through a die to form a strand, cooled and solidified in a water tank at 25°C, and cut into pieces to be used as feed material in the form of chips.

The chips were supplied to a single screw extruder, melt-extruded at 220°C, filtered through a sintered filter with a 25 μm cutoff to remove foreign objects, extruded through a T-die onto a cast drum controlled at a surface temperature of 120°C, and kept in contact with the drum for 15 seconds to achieve casting into an unstretched sheet. Subsequently, it was preheated on a ceramic roll heated at 100°C, and stretched 4.5 times in the length direction of the film. After being cooled, it was held with a clip at the end, introduced into a tenter type stretching machine, and stretched 6 times at 145°C. Immediately, it was heat-treated at 155°C for 6 seconds while being relaxed by 8% in the width direction, thereby providing a porous polypropylene film with a thickness of 23 μm.

One side (the surface in contact with the drum during the preceding melt extrusion step, hereinafter referred to as the surface D) of said porous polypropylene film was subjected to corona discharge treatment, and a coating material to form a particle-containing layer with the undermentioned composition was spread with a Meyer bar, followed by drying in a hot air oven at 70°C for 1 minute, thereby providing a separator in the form of a porous film with a total thickness of 25 μm.

< Coating material to form particle-containing layer >

Carboxymethyl cellulose (supplied by Daicel Chemical Industries, Ltd., mass average molecular weight 1,300,000): 1 part by mass Zirconia particles with an average particle diameter 1 μm: 15 parts by mass

Polyethylene-based particles (Chemipearl W100, supplied by Mitsui Chemicals, Inc., average particle diameter 3 μm, melting point 128°C): 37.5 parts by mass (25 parts by mass in terms of solids alone) Polyethylene glycol with epoxy at both ends (Denacol EX-861, supplied by Nagase ChemteX Corporation): 2 parts by mass Purified water: 160 parts by mass

(Example 2)

A mixture consisting of 100 parts by mass of high density polyethylene resin with a mass average molecular weight of 400,000, and 0.1 part by mass of an antioxidant (IRGANOX1010, supplied by Ciba Specialty Chemicals) was prepared, and 80 parts by mass of paraffin oil was added, followed by kneading in a twin screw extruder at 180°C and extrusion through a T-die onto a cast drum to provide an unstretched sheet. Subsequently, it was introduced into a simultaneous biaxial stretching machine, and stretched 5 times at 120°C in both the length direction and the width direction. In addition, it was immersed in a methylene chloride solvent to extract and remove paraffin oil, and heat-treated at 120°C to provide a porous polyethylene film with a thickness of 18 μm.

The surface D of said porous polyethylene film was subjected to corona discharge treatment, and a coating material to form a particle-containing layer with the undermentioned composition was spread with a Meyer bar, followed by drying in a hot air oven at 65°C for 1 minute, thereby providing a separator in the form of a porous film with a total thickness of 20 μm.

< Coating material to form particle-containing layer >

Hydroxylethyl cellulose (supplied by Daicel Chemical Industries, Ltd., mass average molecular weight 1,020,000): 1 part by mass Zirconia particles with an average particle diameter 1 μm: 10 parts by mass

Polyethylene-based particles (Chemipearl W400, supplied by Mitsui Chemicals, Inc., average particle diameter 4 μm, melting point 110°C) : 22.5 parts by mass (15 parts by mass in terms of solids alone) Polyethylene glycol with epoxy at both ends (Denacol EX-861, supplied by Nagase ChemteX Corporation): 2 parts by mass Purified water: 120 parts by mass

(Example 3)

Material resins for producing a polyolefin based porous film, namely, 93 parts by mass of PP-1, 2 parts by mass of high melt tension polypropylene resin (WB130HMS polypropylene resin, supplied by Borealis, hereinafter referred to as HMS-PP-2), 5 parts by mass of PE-1, 0.15 parts by mass of a β-form nucleating agent, and 0.25 part by mass of antioxidants were fed from a scale hopper into a twin screw extruder in such a way that they would be mixed at the ratio as specified above, melt-kneaded at 300°C, extruded through a die to form a strand, cooled and solidified in a water tank at 25°C, and cut into pieces to be used as feed material in the form of chips.

The chips were supplied to a single screw extruder, melt-extruded at 220°C, filtered through a sintered filter with a 30 μm cutoff to remove foreign objects, extruded through a T-die onto a cast drum controlled at a surface temperature of 120°C, and kept in contact with the drum for 15 seconds to achieve casting into an unstretched sheet. Subsequently, it was preheated on a ceramic roll heated at 100°C, and stretched 5 times in the length direction of the film. After being cooled, it was held with a clip at the end, introduced into a tenter type stretching machine, and stretched 6.5 times at 145°C. Immediately, it was heat-treated at 155°C for 6 seconds while being relaxed by 8% in the width direction, thereby providing a porous polypropylene film with a thickness of 20 μm.

The surface D of said porous polypropylene film was subjected to corona discharge treatment, and a coating material to form a particle-containing layer with the undermentioned composition was spread with a Meyer bar, followed by drying in a hot air oven at 80°C for 1 minute, thereby providing a separator in the form of a porous film with a total thickness of 24 μm.

< Coating material to form particle-containing layer >

Carboxymethyl cellulose (supplied by Daicel Chemical Industries, Ltd., mass average molecular weight 800,000): 1 part by mass
Silica particles with an average particle diameter 1.5 μm: 15 parts by mass
Polyethylene-based particles (Chemipearl W100, supplied by Mitsui Chemicals, Inc., average particle diameter 3 μm,

melting point 128°C): 10 parts by mass (4 parts by mass in terms of solids alone) Purified water: 70 parts by mass

(Example 4)

Material resins for producing a polyolefin based porous film, namely, 96 parts by mass of PP-1, 1 part by mass of HMS-PP-2, 3 parts by mass of PE-1, 0.25 parts by mass of a β-form nucleating agent, and 0.25 part by mass of antioxidants were fed from a scale hopper into a twin screw extruder in such a way that they would be mixed at the ratio as specified above, melt-kneaded at 300°C, extruded through a die to form a strand, cooled and solidified in a water tank at 25°C, and cut into pieces to be used as feed material in the form of chips.

The chips were supplied to a single screw extruder, melt-extruded at 220°C, filtered through a sintered filter with a 30 μm cutoff to remove foreign objects, extruded through a T-die onto a cast drum controlled at a surface temperature of 120°C, and kept in contact with the drum for 15 seconds to achieve casting into an unstretched sheet. Subsequently, it was preheated on a ceramic roll heated at 100°C, and stretched 5 times in the length direction of the film. After being cooled, it was held with a clip at the end, introduced into a tenter type stretching machine, and stretched 6 times at 150°C. Immediately, it was heat-treated at 155°C for 6 seconds while being relaxed by 8% in the width direction, thereby providing a porous polypropylene film with a thickness of 20 μm.

Both surfaces of said porous polypropylene film were subjected to corona discharge treatment, and a coating material to form a particle-containing layer with the undermentioned composition was spread over both surfaces with a Meyer bar, followed by drying in a hot air oven at 75°C for 1 minute, thereby providing a separator in the form of a porous film with a total thickness of 24 μm.

< Coating material to form particle-containing layer >

Carboxymethyl cellulose (supplied by Daicel Chemical Industries, Ltd., mass average molecular weight 800,000): 1 part by mass Silica particles with an average particle diameter 0.4 μm: 15 parts by mass Polyethylene-based particles (Chemipearl W700, supplied by Mitsui Chemicals, Inc., average particle diameter 1 μm, melting point 132 °C) : 40 parts by mass (16 parts by mass in terms of solids alone) Polyethylene glycol with epoxy at both ends (Denacol EX-861, supplied by Nagase ChemteX Corporation): 2 parts by mass
Purified water: 60 parts by mass

(Example 5)

Except for adjusting the thickness to 18 μm, the same procedure as in Example 1 was carried out to produce a polyolefin based porous film.

Both surfaces of said porous polypropylene film were subjected to corona discharge treatment, and a coating material to form a particle-containing layer with the undermentioned composition was spread over both surfaces with a Meyer bar, followed by drying in a hot air oven at 70°C for 1 minute, thereby providing a separator in the form of a porous film with a total thickness of 24 μm.

< Coating material to form particle-containing layer >

Carboxymethyl cellulose (supplied by Daicel Chemical Industries, Ltd., mass average molecular weight 800,000): 1 part by mass Titania particles with an average particle diameter 0.4 μm: 4 parts by mass

Polyethylene-based particles (Chemipearl W100, supplied by Mitsui Chemicals, Inc., average particle diameter 3 μm, melting point 128°C): 10 parts by mass (4 parts by mass in terms of solids alone) Polyethylene glycol with epoxy at both ends (Denacol EX-861, supplied by Nagase ChemteX Corporation): 2 parts by mass
Purified water: 24 parts by mass

(Example 6)

The same polyolefin based porous film as in Example 4 was used, but the coating thickness of the coating material to form the particle-containing layer was increased to adjust the total thickness to 36 μm. Otherwise the same procedure as in Example 4 was carried out to produce a separator in the form of a porous film.

(Example 7)

Except for using a polypropylene nonwoven fabric with a thickness of 20 μm (supplied by Japan Vilene Co., Ltd.) instead of polyolefin based porous film, the same procedure as in Example 4 was carried out to produce a separator in the form of a porous film with a total thickness of 24 μm.

(Example 8)

The same polypropylene nonwoven fabric as in Example 7 was used, but the coating thickness of the coating material to form the particle-containing layer was increased to adjust the total thickness to 36 μm. Otherwise the same procedure as in Example 7 was carried out to produce a separator in the form of a porous film.

(Comparative example 1)

The polyolefin based porous film prepared in Example 1 was used, without further processing, as separator for evaluation.

(Comparative example 2)

Except that the particle-containing layer actually contained no silica particles and no crosslinking agent (polyethylene glycol with epoxy at both bonds), the same procedure as in Example 4 was carried out to produce a separator for evaluation.

(Comparative example 3)

The thermoplastic resin particles shown below were added to the particle-containing layer instead of those used in Example 1, and otherwise the same procedure as in Example 1 was carried out to produce a separator for evaluation.

Polypropylene-based particles (supplied by Mitsui Chemicals, Inc., Chemipearl WP100, average particle diameter 1 μm, melting point 148°C) : 37.5 parts by mass (25 parts by mass in terms of solids alone)

[Table 1]

| | | Example 1 | Example 2 | Example 3 | Example 4 |
|---|---|---|---|---|---|
| polyolefin based porous film | composition | PP | PE | PP | PP |
| | melting point (°C) | 171 | 147 | 172 | 171 |
| | β-form crystal forming ability(%) | 42 | 0 | 39 | 58 |
| | pore size (nm) | 45 | 70 | 50 | 50 |
| | thickness (μm) | 23 | 18 | 20 | 20 |
| particle layer | cellulose based resin | CMC | HEC | CMC | CMC |
| | inorganic particles | zirconia | zirconia | silica | silica |
| | average particle diameter of inorganic particles (μm) | 1 | 1 | 0.5 | 1.5 |
| | thermoplastic resin particles | PE | PE | PE | PE |
| | thermoplastic resin particles melting point (°C) | 128 | 110 | 128 | 132 |
| | mass composition ratio (solids only) (cellulose: inorganic: resin particles) | 1: 15: 25 | 1: 10: 15 | 1: 15: 4 | 1: 15: 16 |
| | both sides / one side | one side | one side | one side | both sides |
| | thickness after drying (μm) (thickness of one layer in two side coated film) | 2 | 2 | 4 | 2 |

(continued)

|  | | | Example 1 | Example 2 | Example 3 | Example 4 |
|---|---|---|---|---|---|---|
| properties | separator's total thickness ($\mu$m) | | 25 | 20 | 24 | 24 |
| | air permeation resistance (sec) | | 260 | 350 | 280 | 180 |
| | contact | | A | A | A | A |
| | shutdown function | | A | B | A | A |
| | meltdown resistance | | A | A | A | A |
| | loop stiffness ($\mu$N/cm) | | 850 | 900 | 500 | 1200 |
| | separator resistance | | B | C | B | A |
| | battery evaluation | | A | A | A | A |

[Table 2]

|  | | Example 5 | Comparative example 1 | Comparative example 2 | Comparative example 3 |
|---|---|---|---|---|---|
| polyolefin based porous film | composition | PP | PP | PP | PP |
| | melting point (°C) | 171 | 171 | 171 | 171 |
| | $\beta$-form crystal forming ability(%) | 42 | 42 | 58 | 42 |
| | pore size (nm) | 45 | 45 | 50 | 45 |
| | thickness ($\mu$m) | 18 | 23 | 20 | 23 |
| particle layer | cellulose based resin | CMC | - | CMC | CMC |
| | inorganic particles | titania | - | - | zirconia |
| | average particle diameter of inorganic particles ($\mu$m) | 0.4 | - | - | 1 |
| | thermoplastic resin particles | PE | - | PE | PP |
| | thermoplastic resin particles melting point (°C) | 128 | - | 132 | 148 |
| | mass composition ratio (solids only) (cellulose: inorganic: resin particles) | 1: 4: 4 | - | 1: 0: 16 | 1: 15: 25 |
| | both sides / one side | both sides | - | both sides | one side |
| | thickness after drying ($\mu$m) | 3 | - | 2 | 2 |
| properties | separator's total thickness ($\mu$m) | 24 | 23 | 24 | 25 |
| | air permeation resistance (sec) | 200 | 240 | 180 | 260 |
| | contact | A | - | A | A |
| | shutdown function | A | D | A | D |
| | meltdown resistance | B | C | C | A |
| | loop stiffness ($\mu$N/cm) | 1300 | 400 | 450 | 1050 |
| | separator resistance | A | B | A | B |
| | battery evaluation | A | A | A | A |

[Table 3]

| | | | Example 6 | Example 7 | Example 8 |
|---|---|---|---|---|---|
| polyolefin based porous film | composition | | PP | PP | PP |
| | melting point (°C) | | 171 | 171 | 171 |
| | β-form crystal forming ability(%) | | 58 | 0 | 0 |
| | pore size (nm) | | 50 | 300 | 300 |
| | thickness (μm) | | 20 | 20 | 20 |
| particle layer | cellulose based resin | | CMC | CMC | CMC |
| | inorganic particles | | silica | silica | silica |
| | average particle diameter of inorganic particles (μm) | | 1.5 | 1.5 | 1.5 |
| | thermoplastic resin particles | | PE | PE | PE |
| | thermoplastic resin particles melting point (°C) | | 132 | 132 | 132 |
| | mass composition ratio (solids only) (cellulose: inorganic: resin particles) | | 1: 15: 16 | 1: 15: 16 | 1: 15: 16 |
| | both sides / one side | | both sides | both sides | both sides |
| | thickness after drying (μm) | | 8 | 2 | 8 |
| properties | separator's total thickness (μm) | | 36 | 24 | 36 |
| | air permeation resistance (sec) | | 220 | 50 | 80 |
| | contact | | A | A | A |
| | shutdown function | | A | A | A |
| | meltdown resistance | | A | A | A |
| | loop stiffness (μN/cm) | | 700 | 900 | 600 |
| | separator resistance | | C | A | B |
| | battery evaluation | | A | C | B |

Abbreviations in Tables
PP: polypropylene
PE: polyethylene
CMC: carboxymethyl cellulose
HEC: hydroxyethyl cellulose

In those Examples where the requirements of the invention are met, the separators produced have good properties in term of the shutdown function and meltdown resistance, ensuring high safety characteristics. In Comparative examples, on the other hand, the separators produced were inferior in term of both or either of the shutdown function and meltdown resistance, resulting in poor safety characteristics.

(Example 9)

Material resins for producing a polyolefin based porous film, namely, 94 parts by mass of homopolypropylene (FSX80E 4 supplied by Sumitomo Chemical Co., Ltd., hereinafter referred to as PP-1), 1 part by mass of high melt tension polypropylene resin (PF-814 polypropylene, supplied by Basell, hereinafter referred to as HMS-PP-1), 5 parts by mass of ethylene-octene-1 copolymer (Engage 8411, with a melt index of 18 g/10 min, supplied by The Dow Chemical Company, hereinafter simply referred to as PE-1), 0.2 part by mass of N,N'-dicyclohexyl-2,6-naphthalene dicarboxy amide, used as β-form nucleating agent, (Nu-100, supplied by New Japan Chemical Co., Ltd., hereinafter simply referred to as β-form nucleating agent), and 0.15 and 0.1 parts by mass of two antioxidants

(IRGANOX1010 and IRGAFOS168, respectively, supplied by Ciba Specialty Chemicals, hereinafter simply referred to as antioxidants, added at a mass ratio 3:2 unless otherwise specified) were fed from a scale hopper into a twin screw extruder in such a way that they would be mixed at the ratio as specified above, melt-kneaded at 300°C, extruded through a die to form a strand, cooled and solidified in a water tank at 25°C, and cut into pieces to be used as feed material in the form of chips.

The chips were supplied to a single screw extruder, melt-extruded at 220°C, filtered through a sintered filter with a 25 $\mu$m cutoff to remove foreign objects, extruded through a T-die onto a cast drum controlled at a surface temperature of 120°C, and kept in contact with the drum for 15 seconds to achieve casting into an unstretched sheet. Subsequently, it was preheated on a ceramic roll heated at 100°C, and stretched 4.5 times in the length direction of the film. After being cooled, it was held with a clip at the end, introduced into a tenter type stretching machine, and stretched 6 times at 145°C. Immediately, it was heat-treated at 155°C for 6 seconds while being relaxed by 8% in the width direction, thereby providing a porous resin film with a thickness of 23 $\mu$m.

One side (the surface in contact with the drum during the preceding melt extrusion step, hereinafter referred to as the surface D) of said porous resin film was subjected to corona discharge treatment, and an aqueous coating material with the undermentioned composition was spread with a Meyer bar, followed by drying in a hot air oven at 70°C for 1 minute, thereby producing a gas permeable film with a total thickness of 25 $\mu$m.

< Composition of aqueous coating material > >

Carboxymethyl cellulose (supplied by Daicel Chemical Industries, Ltd., mass average molecular weight 1,300,000): 1 part by mass

Zirconia particles with an average particle diameter 1 $\mu$m: 15 parts by mass

Polyethylene glycol with epoxy at both ends (Denacol EX-861, supplied by Nagase ChemteX Corporation): 2 parts by mass

Purified water: 160 parts by mass

(Example 10)

A uniaxially stretched film produced by longitudinal stretching as in Example 9 was subjected to corona discharge treatment, and an aqueous coating material as used in Example 1 was spread with a Meyer bar, followed by introducing the film into a tenter type stretching machine to perform transverse stretching and heat treatment, thereby producing a gas permeable film with a total thickness of 25 $\mu$m.

(Example 11)

Except for applying an aqueous coating material over both sides of the resin film, the same procedure as in Example 10 was carried out to produce a gas permeable film with a total thickness of 25 $\mu$m.

[Table 4]

| | | | Example 9 | Example 10 | Example 11 |
|---|---|---|---|---|---|
| porous film | composition | | polypropylene | polypropylene | polypropylene |
| | melting point (°C) | | 171 | 171 | 171 |
| | $\beta$-form crystal forming ability (%) | | 42 | 42 | 42 |
| properties | total thickness ($\mu$m) | | 25 | 25 | 25 |
| | air permeation resistance (sec) | | 260 | 250 | 250 |
| | dimension al stability (%) | longitudinal | 6 | 4 | 4 |
| | | transverse | 10 | 7 | 6 |
| | resistance to water absorption (%) | | 0.2 | 0.07 | 0.05 |
| | mechanical properties (N) | | 2.1 | 2.4 | 2.4 |

Gas permeable films having good quality in terms of dimensional stability, water resistance, and mechanical properties were obtained in Examples where the production method of the invention was adopted. In Comparative examples, on the other hand, those obtained were inferior in any of the properties.

[Industrial applicability]

The power storage device separator of the invention has not only high gas permeability but also a good shutdown function and meltdown resistance, and therefore, it can serve preferably as an extremely safe separator particularly in nonaqueous electrolyte secondary batteries such as lithium ion secondary batteries.

## Claims

1. A power storage device separator comprising a polyolefin based porous film laminated, by coating, on at least one side with particle-containing layer containing inorganic particles selected from the group consisting of silica, alumina, titania, zirconia, barium sulfate, calcium carbonate, aluminum silicate, calcium phosphate, mica, kaolin and clay, and thermoplastic resin particles with a melting point of 100 to 140 °C, determined by differential scanning calorimetry with a first heating run from room temperature to 200 °C at a rate of 20 °C/min., wherein the temperature at which the highest-temperature peak appeared was taken as the melting point of the thermoplastic resin particles, wherein said polyolefin based porous film has an average through-pore size of 20 to 100 nm and the polyolefin which constitutes the polyolefin-based porous film includes a single-component polyolefin resin selected from the group consisting of polyethylene, polypropylene, polybutene-1, poly-4-methyl-pentene-1, mixtures thereof and random or block copolymers of monomers.

2. A power storage device separator as claimed in Claim 1 wherein said particle-containing layer contains a cellulose-based resin.

3. A power storage device separator as claimed in either Claim 1 or 2 wherein said polyolefin based porous film has melting point of 155 to 180 °C, determined by differential scanning calorimetry with a first heating run from room temperature to 280 °C at a rate of 10 °C/min., wherein the peak at the highest temperature of those observed during the first heating run was taken as the melting point of the porous film.

4. A power storage device separator as claimed in any of Claims 1 to 3 wherein said polyolefin based porous film contains polypropylene resin with [beta]-form crystal forming ability of 40 to 80%, determined by differential scanning calorimetry as described herein.

5. A power storage device separator as claimed in any of Claims 1 to 4 wherein the thickness of the particle-containing layer is 1 to 6 $\mu$m.

6. A power storage device separator as claimed in any of Claims 1 to 5 wherein the thickness of the particle-containing layer is 0.5 to 3 times as large as the average particle diameter of the thermoplastic resin particles.

7. A power storage device separator as claimed in Claim 2 that contains said cellulose based resin and said inorganic particles at a mass ratio of 1:5 to 1:25.

8. A power storage device separator as claimed in Claim 1 wherein the content of the thermoplastic resin particles with a melting point of 100 to 140 °C is 10 to 150 parts by mass relative to 100 parts by mass of the total amount of the cellulose based resin and inorganic particles contained in the particle-containing layer.

9. A power storage device separator as claimed in any of Claims 1 to 8 wherein said particle-containing layer contains a crosslinking agent.

10. A gas permeable film production method for producing a power storage device as claimed in any of claims 1 to 9 comprising an aqueous coating material prepared by mixing said inorganic particles and a binder is spread over at least one side of said polyolefin based porous resin film to produce a coated layer, followed by drying of this coated layer to form a non-water-soluble particle layer.

11. A gas permeable film production method as claimed in Claim 10 wherein said binder is a water-soluble cellulose based resin.

**Patentansprüche**

1. Energiespeichervorrichtungstrenner, welcher einen polyolefinbasierten porösen Film umfasst, der durch Beschichtung auf mindestens einer Seite mit einer partikelhaltigen Schicht laminiert ist, welche anorganische Partikel enthält, die ausgewählt sind aus der Gruppe bestehend aus Siliziumdioxid, Aluminiumoxid, Titanoxid, Zirkoniumoxid, Bariumsulfat, Calciumcarbonat, Aluminiumsilikat, Calciumphosphat, Glimmer, Kaolin und Ton, und thermoplastische Harzpartikel mit einem Schmelzpunkt von 100 bis 140 °C, durch Differential-Scanning-Kalorimetrie mit einem ersten Aufheizlauf von Raumtemperatur auf 200 °C bei einer Rate von 20 °C/min. bestimmt, wobei die Temperatur, bei welcher der höchste Temperaturpeak erschien, als Schmelzpunkt der thermoplastischen Harzpartikel genommen wurde, wobei der polyolefinbasierte poröse Film eine mittlere Durch-Porengröße (through-pore size) von 20 bis 100 nm hat und das Polyolefin, welches den polyolefinbasierten porösen Film darstellt, ein Einkomponentenpolyolefinharz beinhaltet, welches ausgewählt ist aus der Gruppe bestehend aus Polyethylen, Polypropylen, Polybut-1-en, Poly-4-methyl-pent-1-en, Mischungen davon und Random- oder Blockkopolymeren von Monomeren.

2. Energiespeichervorrichtungstrenner gemäß Anspruch 1, wobei die partikelhaltige Schicht ein zellulosebasiertes Harz enthält.

3. Energiespeichervorrichtungstrenner gemäß einem der Ansprüche 1 oder 2, wobei der polyolefinbasierte poröse Film einen Schmelzpunkt von 155 bis 180 °C hat, durch Differential-Scanning-Kalorimetrie mit einem ersten Aufheizlauf von Raumtemperatur bis 280 °C mit einer Rate von 10 °C/min. bestimmt, wobei der Peak bei der höchsten Temperatur von denen, die während des ersten Aufheizlauf beobachtet wurden, als der Schmelzpunkt des porösen Films genommen wurden.

4. Energiespeichervorrichtungstrenner gemäß einem der Ansprüche 1 bis 3, wobei der polyolefinbasierte porösen Film Polypropylenharz mit der Fähigkeit enthält, von 40 bis 80% [beta]-Form Kristalle zu bilden, bestimmt durch Differential-Scanning-Kalorimetrie, wie hierin beschrieben.

5. Energiespeichervorrichtungstrenner gemäß einem der Ansprüche 1 bis 4, wobei die Dicke der partikelhaltigen Schicht 1 bis 6 μm ist.

6. Energiespeichervorrichtungstrenner gemäß einem der Ansprüche 1 bis '5, wobei die Dicke der partikelhaltigen Schicht 0,5 bis 3 mal so groß ist wie der durchschnittliche Partikeldurchmesser der thermoplastischem Harzpartikel.

7. Energiespeichervorrichtungstrenner gemäß Anspruch 2, der das zellulosebasierte Harz und die anorganischen Partikel in einem Massenverhältnis von 1:5 bis 1:25 enthält.

8. Energiespeichervorrichtungstrenner gemäß Anspruch 1, wobei der Gehalt an thermoplastischen Harzpartikel mit einem Schmelzpunkt von 100 bis 140 °C 10 bis 150 Massenteile relativ zu 100 Massenteile der Gesamtmenge des zellulosebasierten Harzes und der in der partikelhaltigen Schicht enthaltenen anorganischen Partikel ist.

9. Energiespeichervorrichtungstrenner nach einem der Ansprüche 1 bis 8, wobei die partikelhaltige Schicht ein Vernetzungsmittel enthält.

10. Ein Herstellungsverfahren eines gasdurchlässigen Films zur Herstellung einer Energiespeichervorrichtung gemäß einem der Ansprüche 1 bis 9, umfassend ein wässriges Beschichtungsmaterial, hergestellt durch Mischen der anorganischen Partikel und einem Bindemittel, welches auf wenigstens einer Seite des polyolefinbasierten porösen Harzfilms verteilt wird, um eine Überzugsschicht zu bilden, gefolgt vom Trocknen der Überzugsschicht, um eine nicht wasserlösliche Partikelschicht zu bilden.

11. Ein Herstellungsverfahren einer gasdurchlässigen Schicht gemäß Anspruch 10, wobei das Bindemittel ein wasserlösliches zellulosebasiertes Harz ist.

**Revendications**

1. Séparateur destiné à un dispositif de stockage d'énergie, comprenant un film poreux à base de polyoléfine stratifié, par enduction, sur un côté au moins avec une couche qui contient des particules, qui contient des particules inorganiques sélectionnées dans le groupe constitué par une silice, une alumine, un oxyde de titane, une zircone, un sulfate de baryum, un carbonate de calcium, un silicate d'aluminium, un phosphate de calcium, un mica, un kaolin et une argile et des particules de résine thermoplastique qui présentent un point de fusion compris entre 100 °C et 140 °C, déterminé par une analyse calorimétrique à compensation de puissance avec une première élévation de la température qui part de la température ambiante pour atteindre 200 °C à une vitesse égale à 20 °C/mn, dans lequel la température à laquelle est apparue la crête de la température la plus élevée a été prise en tant que point de fusion des particules de résine thermoplastique, dans laquelle ledit film poreux à base de polyoléfine présente une taille moyenne de pore traversant comprise entre 20 nm et 100 nm, et la polyoléfine qui constitue le film poreux à base de polyoléfine comprend une résine de polyoléfine à un seul composant sélectionnée dans le groupe constitué par un polyéthylène, un polypropylène, un polybutène-1, un poly-4-méthyl-pentène-1, des mélanges de ceux-ci et des copolymères à enchaînement aléatoire ou à blocs de monomères.

2. Séparateur destiné à un dispositif de stockage d'énergie selon la revendication 1, dans lequel ladite couche qui contient des particules contient une résine à base de cellulose.

3. Séparateur destiné à un dispositif de stockage d'énergie selon la revendication 1 ou la revendication 2, dans lequel ledit film poreux à base de polyoléfine présente un point de fusion compris entre 155 °C et 180 °C, déterminé par une analyse calorimétrique à compensation de puissance avec une première élévation de la température qui part de la température ambiante pour atteindre 280 °C à une vitesse égale à 10 °C/mn, dans lequel la crête à la température la plus élevée parmi celles observées au cours de la première élévation de la température a été prise en tant que point de fusion du film poreux.

4. Séparateur destiné à un dispositif de stockage d'énergie selon l'une quelconque des revendications 1 à 3, dans lequel ledit film poreux à base de polyoléfine contient une résine de polypropylène avec une capacité de formation d'un cristal de forme [bêta] comprise entre 40 % et 80 %, déterminée par une analyse calorimétrie à compensation de puissance comme cela est décrit ci-dessus.

5. Séparateur destiné à un dispositif de stockage d'énergie selon l'une quelconque des revendications 1 à 4, dans lequel l'épaisseur de la couche qui contient des particules est comprise entre 1 $\mu$m et 6 $\mu$m.

6. Séparateur destiné à un dispositif de stockage d'énergie selon l'une quelconque des revendications 1 à 5, dans lequel l'épaisseur de la couche qui contient des particules est entre 0,5 fois et 3 fois plus grande que le diamètre moyen de particules des particules de résine thermoplastique.

7. Séparateur destiné à un dispositif de stockage d'énergie selon la revendication 2, qui contient ladite résine à base de cellulose et lesdites particules inorganiques selon un rapport de masse compris entre 1:5 et 1:25.

8. Séparateur destiné à un dispositif de stockage d'énergie selon la revendication 1, dans lequel la teneur des particules de résine thermoplastique qui présentent un point de fusion compris entre 100 °C et 140 °C est de 10 parties à 150 parties en masse par rapport à 100 parties en masse de la quantité totale de la résine à base de cellulose et des particules inorganiques contenues dans la couche qui contient des particules.

9. Séparateur destiné à un dispositif de stockage d'énergie selon l'une quelconque des revendications 1 à 8, dans lequel ladite couche qui contient des particules contient un agent de réticulation.

10. Procédé de production d'un film perméable au gaz destiné à produire un dispositif de stockage d'énergie selon l'une quelconque des revendications 1 à 9, comprenant un matériau d'enduction aqueux préparé en mélangeant lesdites particules inorganiques et un liant est étalé sur un côté au moins dudit film de résine poreux à base de polyoléfine de façon à produire une couche enduite, après quoi cette couche enduite est séchée de manière à former une couche de particules non soluble dans l'eau.

11. Procédé de production d'un film perméable au gaz selon la revendication 10, dans lequel ledit liant est une résine à base de cellulose soluble dans l'eau.

**EP 2 306 552 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI11302434 B
- WO 200561599 A
- JP 2006183008 A
- JP 2005285385 A
- JP 2007324073 A

### Non-patent literature cited in the description

- Titanium Oxide Physical Properties and Applied Techniques. *Titanium Oxide Physical Properties and Applied Techniques,* 1991, 82-84